# EUROPEAN PATENT SPECIFICATION

(11) **EP 4 450 537 B1**
(45) Date of publication and mention of the grant of the patent: **26.08.2026**
(21) Application number: 23752596.9
(22) Date of filing: 12.01.2023
(51) Int. Cl.: C08J 5/08, C08K 5/00, C08J 5/24, B32B 5/02, C08J 5/04, C03C 25/40, C03C 3/085, B32B 27/22, B32B 27/12, B32B 27/30, C03C 13/00, C03C 25/1095, C03C 25/25, C03C 25/30, C03C 25/323, C08K 5/103, C08K 5/523, C08K 7/14, C08L 27/06

(54) **FIBER-REINFORCED RESIN SHEET**
FASERVERSTÄRKTE HARZFOLIE
FEUILLE DE RÉSINE RENFORCÉE PAR DES FIBRES

(30) Priority: 08.02.2022 JP 2022017971
(43) Date of publication of application: 23.10.2024
(73) Proprietor: Nitto Boseki Co., Ltd., Fukushima-shi, Fukushima 960-8161 (JP)
(72) Inventor: ADACHI, Tetsuya, Fukushima-shi, Fukushima 960-8161 (JP); ISHIDA, Tetsuya, Fukushima-shi, Fukushima 960-8161 (JP)
(74) Representative: Vossius & Partner Patentanwälte Rechtsanwälte mbB
(86) International application number: PCT/JP2023/000666
(87) International publication number: WO 2023/153127

(56) References cited:
- WO-A1-2009/063809
- WO-A1-2021/251103
- CN-A- 101 812 206
- JP-A- 2010 052 370
- JP-A- 2015 077 756
- JP-A- 2015 155 156
- JP-A- H0 455 481

## Description

### Technical Field

The present invention relates to a fiber-reinforced resin sheet.

### Background Art

Fiber-reinforced resin sheets in which a vinyl chloride-based resin is reinforced with glass fibers are flame-retardant and transparent, and are therefore used as construction materials such as flame-proof hanging walls and space partition materials. Patent Literature 1 discloses, as a partition sheet that is transparent and is used for partitioning in factories and the like, a fiber-reinforced resin sheet having a glass fiber fabric impregnated with a resin composition including a vinyl chloride-based resin, in which a content of the glass fiber fabric is 10 to 50% by mass with respect to a total mass of the fiber-reinforced resin sheet, the glass constituting the glass fiber fabric has a basic composition including at least one of CaO and MgO and SiO₂, when contents of SiO₂, CaO, and MgO with respect to a total mass of the glass are designated as X, Y, and Z (% by mass), respectively, a value of X - (Y + Z) is 40 to 60% by mass, and a haze value is 40% or less.

### Citation List

### Patent Literature

Patent Literature 1: International Publication WO 2009/063809

### Summary of Invention

### Technical Problem

However, the fiber-reinforced resin sheet described in Patent Literature 1 does not have sufficient mechanical strength and cannot be used as, for example, a material that is required to have mechanical strength in addition to transparency, such as a base material for tent films. On the other hand, the fiber-reinforced resin sheet has a problem that when the mass per unit length of the glass fibers is increased, the mechanical strength of the fiber-reinforced resin sheet is increased; however, transparency is deteriorated.

Even if transparentization can be realized in a fiber-reinforced resin sheet obtained by impregnating a glass fiber fabric with a resin composition, there is a problem that the production efficiency becomes poor because it takes time for the glass fiber fabric to be completely impregnated with the resin composition, or that when the glass fiber fabric is impregnated with the resin composition and then rolled before being heated and completely cured, the resin composition on one side sticks to the resin composition on another side, and the handleability during production is lowered.

An object of the present invention is to provide a fiber-reinforced resin sheet having high tensile strength, having transparency, and having excellent impregnability and excellent handleability (tackiness) during production.

### Solution to Problem

The present invention provides the following [1] to [6].
[1] A fiber-reinforced resin sheet including: a glass fiber fabric having a warp and a weft; and a resin composition impregnated into the glass fiber fabric, in which the glass constituting the glass fiber fabric includes SiO₂ in an amount in the range of 60.0 to 70.0% by mass, Al₂O₃ in an amount in the range of 20.0 to 30.0% by mass, and MgO in an amount in the range of 5.0 to 15.0% by mass, masses per 1000 m of the warp and the weft constituting the glass fiber fabric are each 45.0 to 335.0 g/1000 m, the resin composition contains a vinyl chloride-based resin and a plasticizer, a content of the plasticizer is 30.0 to 63.0% by mass with respect to a total amount of the resin composition, the plasticizer includes a plasticizer A, which is an aromatic phosphoric acid ester-based plasticizer, and a plasticizer B, which is an ester compound of a diol and a carboxylic acid, and a mass ratio of the plasticizer B to the plasticizer A is 0.13 to 3.50.
[2] The fiber-reinforced resin sheet according to [1], in which the mass ratio of the plasticizer B to the plasticizer A is 0.38 to 1.97.
[3] The fiber-reinforced resin sheet according to [1] or [2], in which the mass ratio of the plasticizer B to the plasticizer A is 0.78 to 1.39.
[4] The fiber-reinforced resin sheet according to any one of [1] to [3], in which the plasticizer A is a mixture of two or more kinds of aromatic phosphoric acid ester-based plasticizers.
[5] The fiber-reinforced resin sheet according to any one of [1] to [4], in which the plasticizer B has a molecular weight of 100 to 500.
[6] The fiber-reinforced resin sheet according to any one of [1] to [5], in which the fiber-reinforced resin sheet has a configuration in which a fiber-reinforced resin sheet is sandwiched between resin layers formed of the resin composition or a resin different from this resin composition.

### Advantageous Effects of Invention

According to the present invention, a fiber-reinforced resin sheet having high tensile strength, having transparency, and having excellent impregnability and excellent handleability (tackiness) during production, can be provided.

### Brief Description of Drawings

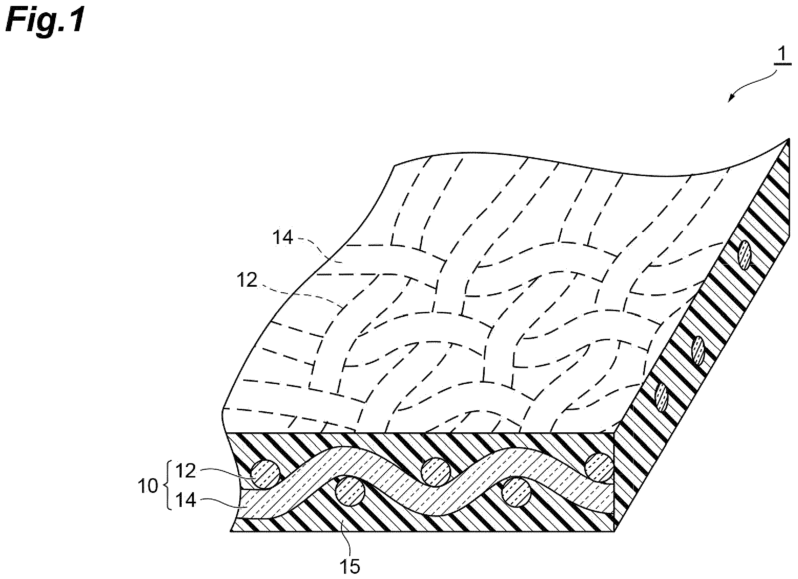

FIG. 1 is a perspective view of a fiber-reinforced resin sheet according to embodiments.

### Description of Embodiments

In the present specification, a numerical value range indicated by using the term "to" means a range including the numerical values described before and after the term "to" as the minimum value and the maximum value, respectively. Unless specifically stated otherwise, the units of the numerical values described before and after the term "to" are the same. With regard to numerical value ranges described stepwise in the present specification, the upper limit value or lower limit value of a numerical value range of a certain stage may be replaced with the upper limit value or lower limit value of a numerical value range of another stage. With regard to a numerical value range described in the present specification, the upper limit value or lower limit value of the numerical value range may be replaced with a value shown in the Examples. Upper limit values and lower limit values described individually can be arbitrarily combined.

Hereinafter, suitable embodiments of the fiber-reinforced resin sheet according to the present invention and a method for producing the same will be described in detail with reference to the drawings. In the drawings, the same elements will be assigned with the same reference numerals, and any duplicate description will not be repeated.

FIG. 1 is a cross-sectional view illustrating an embodiment of the fiber-reinforced resin sheet of the present invention. The fiber-reinforced resin sheet 1 is a sheet in which a glass fiber fabric 10 having a warp 12 and a weft 14 is impregnated with a resin composition 15. That is, the fiber-reinforced resin sheet 1 includes a glass fiber fabric 10 and a resin composition 15. In the fiber-reinforced resin sheet 1, the resin composition 15 is disposed around the glass fiber fabric 10 so as to penetrate into the yarn gaps of the glass fiber fabric 10. Each constituent element of the fiber-reinforced resin sheet 1 will be described in detail below.

### (a) Glass fiber fabric

The glass fiber fabric 10 is formed by weaving the warp 12 and the weft 14 and is a material that serves as a base fabric of the fiber-reinforced resin sheet 1. The warp 12 and the weft 14 are all formed from glass fiber bundles, and a glass fiber bundle is composed of a plurality of glass fiber monofilaments.

The glass constituting the glass fiber fabric 10 includes SiO₂ in an amount in the range of 60.0 to 70.0% by mass, Al₂O₃ in an amount in the range of 20.0 to 30.0% by mass, and MgO in an amount in the range of 5.0 to 15.0% by mass, with respect to a total amount of the glass fiber fabric. When the content of each of SiO₂, Al₂O₃, and MgO in the glass constituting the glass fiber fabric 10 is not within the above-mentioned range, tensile strength or transparency is deteriorated.

In the glass constituting the glass fiber fabric 10, the content of SiO₂ may be 60.5 to 68.0% by mass, 61.0 to 67.0% by mass, 63.0 to 66.5% by mass, or 64.0 to 66.0% by mass, with respect to the total amount of the glass fiber fabric.

In the glass constituting the glass fiber fabric 10, the content of Al₂O₃ may be 20.5 to 27.5% by mass, 21.0 to 27.0% by mass, 23.0 to 26.5% by mass, or 24.0 to 26.0% by mass, with respect to the total amount of the glass fiber fabric.

In the glass constituting the glass fiber fabric 10, the content of MgO may be 6.0 to 14.0% by mass, 7.0 to 13.0% by mass, 8.0 to 12.5% by mass, or 9.0 to 11.0% by mass, with respect to the total amount of the glass fiber fabric.

The glass constituting the glass fiber fabric 10 may or may not include a component other than SiO₂, Al₂O₃, and MgO. Examples of the component other than SiO₂, Al₂O₃, and MgO include CaO, Fe₂O₃, Li₂O, K₂O, Na₂O, ZrO₂, B₂O₃, F₂, Cl₂, TiO₂, CoO, NiO, CuO, ZnO, MnO₂, MoO₃, WO₃, GeO₂, P₂O₅, V₂O₅, BeO, BaO, SnO₂, CeO₂, Y₂O₃, La₂O₃, Bi₂O₃, Gd₂O₃, Pr₂O₃, Sc₂O₃, Yb₂O₃, and Cr₂O₃.

In the glass constituting the glass fiber fabric 10, the content of the component other than SiO₂, Al₂O₃, and MgO may be 15.0% by mass or less, 10.0% by mass or less, 5.0% by mass or less, or 1.0% by mass or less, with respect to the total amount of the glass fiber fabric. The content of the component other than SiO₂, Al₂O₃, and MgO may be each independently less than 0.5% by mass, 0.4% by mass or less, less than 0.1% by mass, or less than 0.05% by mass, with respect to the total amount of the glass fiber fabric.

An example of the glass constituting the glass fiber fabric 10 is a glass including 65.0% by mass of SiO₂, 25.0% by mass of Al₂O₃, and 10% by mass of MgO, with respect to the total amount of the glass fiber fabric.

The content of each component with respect to the total amount of the glass fiber fabric in the glass constituting the glass fiber fabric according to the present embodiment can be measured by using a wavelength dispersive X-ray fluorescence spectrometer.

Regarding the measurement method, a method that will be described below can be used. First, a glass fiber fabric is placed inside a platinum crucible. Here, in a case where organic matter is adhering to the surface of the glass fiber fabric, or in a case where the glass fiber fabric is included in a resin, the glass fiber fabric is used after removing organic matter by, for example, heating the glass fiber fabric in a muffle furnace at 300 to 650°C for about 0.5 to 24 hours, or the like. Next, the glass fiber fabric in the platinum crucible is maintained in an electric furnace at a temperature of 1650°C for 6 hours and is melted while being stirred, and thereby homogeneous molten glass is obtained. Next, the obtained molten glass is poured out onto a carbon plate to fabricate a glass cullet, and then the glass cullet is pulverized and powdered to obtain glass powder. This glass powder is formed into a disk shape with a press machine and is quantitatively analyzed by using a wavelength dispersive X-ray fluorescence spectrometer. In quantitative analysis using a wavelength dispersive X-ray fluorescence spectrometer, specifically, samples for a calibration curve can be created based on the results measured by a fundamental parameter method, and analysis can be performed by a calibration curve method. The content of each component in the samples for a calibration curve can be quantitatively analyzed by using an ICP emission spectrophotometer. These quantitative analysis results are converted in terms of oxide to calculate the content and the total amount of each component, and the content of each of the above-mentioned components can be determined from these numerical values.

The masses per 1000 m of the warp and the weft constituting the glass fiber fabric 10 are each 45.0 to 335.0 g/1000 m. When the masses per 1000 m of the warp and the weft are less than 45.0 g/1000 m, sufficient strength cannot be maintained. When the masses per 1000 m of the warp and the weft are more than 335.0 g/1000 m, transparency deteriorates.

From the viewpoint that transparency is further improved, it is preferable that the masses per 1000 m of the warp and the weft are each 45.0 to 170.0 g/1000 m, 50.0 to 140.0 g/1000 m, 55.0 to 110.0 g/1000 m, 60.0 to 80.0 g/1000 m, or 65.0 to 70.0 g/1000 m.

From the viewpoint that tensile strength is further improved, it is preferable that the masses per 1000 m of the warp and the weft are each 170.0 to 335.0 g/1000 m, 190.0 to 320.0 g/1000 m, 210.0 to 310.0 g/1000 m, 230.0 to 300.0 g/1000 m, 250.0 to 290.0 g/1000 m, or 260.0 to 280.0 g/1000 m.

The masses per 1000 m of the warp and the weft can be measured according to JIS R 3420:2013. In a case where the glass fiber fabric of the present embodiment is included in a fiber-reinforced sheet, the masses of the warp and the weft can be computed by calculation based on the fiber diameter of the glass filaments constituting the warp and the weft measured by the method that will be described below, the number of bundled glass filaments, and the specific gravity of the glass constituting the warp and the weft. The specific gravity of the glass constituting the warp and the weft can be determined by determining the composition of the glass constituting the glass fiber fabric by the above-mentioned method, preparing a glass batch so as to have the same composition, melting and cooling the glass batch to fabricate glass bulk, and measuring the specific gravity of the glass bulk.

The fiber diameter of the glass filaments can be determined by, for example, first polishing a cross-section of a fiber-reinforced resin sheet, subsequently observing the cross-section of the fiber-reinforced resin sheet by using an electron microscope, measuring the lengths of the diameters of the glass filaments for 100 or more glass filaments exposed at the observed cross-section, and calculating the average value of these lengths. The number of bundled glass filaments can be determined by counting the number of filaments constituting the warps and the wefts exposed at the observed cross-section.

The specific gravity of the glass constituting the warp and the weft can be measured by the following method. First, a fiber-reinforced resin sheet is, for example, heated in a muffle furnace at 300 to 650°C for about 0.5 to 24 hours, or the like to decompose organic matter. Next, the remaining glass fibers are placed inside a platinum crucible and maintained in an electric furnace at a temperature of 1650°C for 6 hours to be melted while being stirred, and thereby homogeneous molten glass is obtained. Next, the platinum crucible including the molten glass is taken out from the electric furnace, and the molten glass is cooled. Next, the molten glass is knocked out of the platinum crucible, subsequently the molten glass is heated at a strain removal temperature (660 to 780°C) for 2 hours in order to remove distortion of the glass and cooled to room temperature (20 to 25°C) over 8 hours, and a glass gob is obtained.

The density of the glass fibers can be measured by measuring the weight A of the glass gob in air (density ρ₁) and the weight B of the glass gob in ion-exchanged water (density ρ₀) as a displacement liquid by using a specific gravity measuring device, and calculating the specific gravity (ρ) from the following Formula (β). $ρ = {ρ}_{1} + A \left({ρ}_{0}-{ρ}_{1}\right) / \left(A-B\right)$

The mass per unit area of the glass fiber fabric 10 is preferably 130 g/m² or greater from the viewpoint of increasing tensile strength, and is preferably 565 g/m² or less from the viewpoint of increasing impregnability and transparency. The mass per unit area of the glass fiber fabric 10 may be in the range of 130 to 330 g/m², 140 to 280 g/m², or 150 to 230 g/m² from the viewpoint of further improving transparency, and may be in the range of, for example, 210 to 565 g/m², 330 to 565 g/m², 410 to 535 g/m², or 450 to 510 g/m² from the viewpoint of further improving tensile strength.

The mass per unit area of the glass fiber fabric 10 is the average value of values obtained by measuring the mass of the glass fiber fabric cut into a size of 200 mm × 200 mm at three points using a scale according to JIS R 3420, and converting each of the masses into the mass per 1 m².

The glass fiber fabric 10 is produced by plain weaving the warp 12 and the weft 14. The method of weaving the glass fiber fabric 10 is not limited to plain weaving, and various weaving methods such as twill weaving, satin weaving, basket weaving, and ridge weaving can be employed.

The weaving density of the warp 12 is preferably 22/25 mm or greater and preferably 51/25 mm or less. From the viewpoint of reducing the thickness of the glass fiber fabric and further improving transparency, the weaving density of the warp 12 is more preferably 33 to 51/25 mm. From the viewpoint of increasing the thickness of the glass fiber fabric and further improving tensile strength, the weaving density of the warp 12 is more preferably 22 to 33/25 mm.

The weaving density of the weft 14 is preferably 19/25 mm or greater and preferably 51/25 mm or less. From the viewpoint of reducing the thickness of the glass fiber fabric and further improving transparency, the weaving density of the weft 14 is more preferably 26 to 51/25 mm. From the viewpoint of increasing the thickness of the glass fiber fabric and further improving tensile strength, the weaving density of the weft 14 is more preferably 19 to 26/25 mm.

The weaving density can be determined by counting the number of warps or wefts per a width of 25 mm of glass cloth by using a textile analyzing glass according to JIS R 3420:2013.

The air permeability of the glass fiber fabric may be, for example, 0.5 to 50.0 cm³/cm²/s or 0.8 to 20.0 cm³/cm²/s.

From the viewpoint that tensile strength is improved, the thickness of the glass fiber fabric is preferably 124 µm or greater or may be 140 µm or greater, and from the viewpoint that transparency is improved, the thickness is preferably 485 µm or less or may be 460 µm or less. From the viewpoint of further improving transparency, the thickness of the glass fiber fabric is more preferably 124 to 307 µm. From the viewpoint of further improving tensile strength, the thickness of the glass fiber fabric is more preferably 307 to 485 µm.

The thickness of the glass fiber fabric is the average value of measured values obtained when the thickness of the glass fiber fabric is measured at 15 points using a micrometer according to JIS R 3420.

The filament diameter of the glass filaments constituting the warp and the weft constituting the glass fiber fabric is, for example, in the range of 2.5 to 21.0 µm, preferably in the range of 3.0 to 13.0 µm, and more preferably in the range of 3.0 to 9.0 µm.

The glass fiber fabric 10 may be woven with one type of glass fiber bundle or may be woven with two or more types of glass fiber bundles. For example, the warp 12 and the weft 14 may be composed of glasses having different compositions. In a case where the glass fiber fabric 10 is woven with two or more types of glass fiber bundles, the masses per 1000 m of the glass fiber bundles and the diameters of the glass fiber monofilaments constituting the glass fiber bundles may be respectively the same or may be different. For example, it is acceptable that the glass compositions of the glass fiber bundles are the same whereas the yarn counts of the glass fiber bundles and the diameters of the glass fiber monofilaments are different.

The fiber bundles constituting the glass fiber fabric 10 may consist of doubled yarns, twisted yarns, or doubled and twisted yarns. From the viewpoint of increasing the strength of the glass fiber bundles, it is preferable that the fiber bundles constituting the glass fiber fabric 10 consist of doubled and twisted yarns. From the viewpoint of being easily impregnated with a resin, it is preferable that the fiber bundles constituting the glass fiber fabric 10 consist of doubled yarns.

It is preferable that the glass fiber fabric 10 is subjected to a fiber opening treatment. The yarn gaps can be narrowed by the fiber opening treatment. By the fiber opening treatment, the warp 12 and the weft 14 constituting the glass fiber fabric 10 can be scattered, and the entire glass fiber fabric 10 can be further flattened. In this way, it is possible to change the volume and area ranges occupied by the glass fiber bundles by the fiber opening treatment.

For the purpose of improving durability of the fiber-reinforced resin sheet 1, the glass fiber fabric 10 may be subjected in advance to a surface treatment to adhere an adhesive substance may be adhered thereto. As the adhesive substance, a silane coupling agent can be used. As a result, the interfacial adhesion between the glass fiber fabric 10 and the resin composition 15 is improved. Examples of the silane coupling agent include methacryloxypropyltrimethoxysilane.

### (b) Resin composition

The resin composition 15 includes a vinyl chloride-based resin and a plasticizer. A vinyl chloride-based resin refers to a resin having a molecular chain composed of a copolymer including vinyl chloride as a monomer unit in addition to polyvinyl chloride. Examples of a monomer that can be copolymerized with vinyl chloride include vinylidene chloride, vinyl acetate, ethylene, propylene, acrylonitrile, maleic acid or an ester thereof, acrylic acid or an ester thereof, and methacrylic acid or an ester thereof.

The content of the vinyl chloride-based resin may be 37 to 70% by mass, 35 to 60% by mass, 40 to 55% by mass, or 45 to 55% by mass, based on the total amount of the resin composition.

The plasticizer includes a plasticizer A, which is an aromatic phosphoric acid ester-based plasticizer, and a plasticizer B, which is an ester compound of a diol and a carboxylic acid.

Examples of the plasticizer A include triaryl phosphate isopropylated (TIPP), triphenyl phosphate (TPP), tricresyl phosphate (TCP), trixylenyl phosphate (TXP), cresyl diphenyl phosphate (CDP), monoisopropyl diphenyl phosphate (IPP), diisopropyl monophenyl phosphate (BIPP), 2-ethylhexyl (diphenyl phosphate) (EHDP), (4-tert-butylphenyl) diphenyl phosphate (t-BDP), phenyl bis(4-tert-butylphenyl) phosphate (BBDP), tris(2,4-di-tert-butylphenyl) phosphite (TBDP), resorcinol bis(diphenyl phosphate) (RDP), resorcinol bis(dixylenyl phosphate) (RDX), and bisphenol A bis(diphenyl phosphate) (BDP).

It is preferable that the plasticizer A is a plasticizer represented by the following Formula (1).

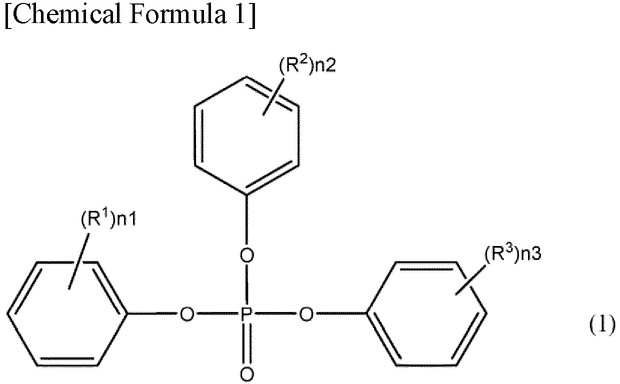

R¹, R², and R³ each independently represent an alkyl group having 1 to 6 carbon atoms. n1, n2, and n3 each independently represent an integer of 0 to 5. n1, n2, and n3 may be each independently 0, or may be 1 to 5, 1 to 4, 1 to 3, 1 to 2, or 1. Examples of the alkyl group having 1 to 6 carbon atoms include a methyl group, an ethyl group, and an isopropyl group.

It is more preferable that the plasticizer A is a plasticizer represented by the following Formula (2).

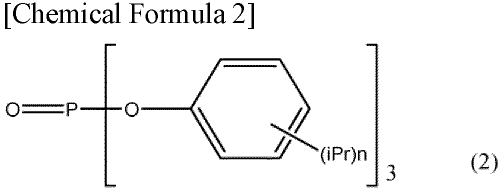

iPr represents an isopropyl group. n represents an integer of 0 to 5. n may be 0, or may be 1 to 5, 1 to 4, 1 to 3, 1 to 2, or 1. A plurality of n's existing therein may be each identical or different.

It is preferable that the plasticizer A is triphenyl phosphate in which n's in Formula (2) are all 0, or triaryl phosphate isopropylated in which at least one n in Formula (2) is 1 or greater.

The plasticizer A is preferably a mixture of two or more kinds of aromatic phosphoric acid ester-based plasticizers, and is preferably a mixture of triaryl phosphate isopropylated and triphenyl phosphate.

The mass ratio of triaryl phosphate isopropylated to triphenyl phosphate may be 2/1 to 4/1.

From the viewpoint of enhancing transparency, the content of the plasticizer A based on the total amount of the resin composition is preferably 5.5% by mass or greater, more preferably 13.0% by mass or greater, even more preferably 19.0% by mass or greater, and particularly preferably 22.5% by mass or greater, and from the viewpoint of obtaining excellent transparency and tackiness, the content is preferably 40.0% by mass or less, more preferably 34.8% by mass or less, even more preferably 30.0% by mass or less, and particularly preferably 28.5% by mass or less.

The plasticizer B is an ester compound of a diol and a carboxylic acid. In this case, the plasticizer B has more excellent transparency and tackiness compared with the case where the plasticizer B is an aliphatic dibasic acid ester-based plasticizer or a phthalic acid ester-based plasticizer, which are ester compounds of a carboxylic acid and an alcohol that is not a diol.

Examples of the diol include 2,2,4-trimethyl-1,3-pentanediol, 1,2-ethanediol, triethylene glycol, neopentyl glycol, 1,6-hexanediol, and 1,9-nonanediol.

Examples of the carboxylic acid include a monocarboxylic acid and a dicarboxylic acid (provided that phthalic acid is excluded). Examples of the monocarboxylic acid include isobutanoic acid, acetic acid, 2-ethylhexanoic acid, methacrylic acid, and acrylic acid. Examples of the dicarboxylic acid (provided that phthalic acid is excluded) include maleic acid and 1,2-cyclohexanedicarboxylic acid. The carboxylic acid is preferably a monocarboxylic acid.

The ester compound may be a monoester in which one hydroxy group in a diol has been esterified, or may be a diester in which two hydroxy groups in a diol have been esterified. The ester compound is preferably a diester in which two hydroxy groups in a diol have been esterified.

Examples of the plasticizer B include 2,2,4-trimethyl-1,3-pentanediol diisobutyrate, 1,2-ethanediol diacetate, 2,2,4-trimethyl-1,3-pentanediol isobutyrate (Texanol), 2,2'-(ethylenebisoxy)bisethanol bis(2-ethylhexanoate), neopentyl glycol dimethacrylate, 1,6-bis(acryloyloxy)hexane, and 1,9-nonanediol diacrylate.

The molecular weight of the plasticizer B may be 100 to 500 and is preferably 200 to 350. By setting the molecular weight of the plasticizer B to 200 to 350, transparency can be further enhanced.

From the viewpoint of obtaining excellent transparency and tackiness, the content of the plasticizer B is preferably 14.0% by mass or greater, more preferably 19.0% by mass, and even more preferably 22.0% by mass or greater, based on the total amount of the resin composition, and from the viewpoint of obtaining excellent transparency, the content is preferably 45.0% by mass or less, more preferably 37.0% by mass or less, even more preferably 30.0% by mass or less, and particularly preferably 28.0% by mass or less.

The content of the plasticizer is 30.0 to 63.0% by mass with respect to the total amount of the resin composition. When the content of the plasticizer is more than 63.0% by mass with respect to the total amount of the resin composition, tackiness is deteriorated, and handling during production is difficult. When the content of the plasticizer is less than 30.0% by mass with respect to the total amount of the resin composition, impregnability and transparency are deteriorated. The content of the plasticizer may be 35.0 to 60.0% by mass, 40.0 to 55.0% by mass, or 45.0 to 53.0% by mass. It is desirable that the total content of the plasticizer A and the plasticizer B is in the range described as the above-described content of the plasticizer with respect to the total amount of the resin composition.

The mass ratio of the plasticizer B to the plasticizer A (mass of plasticizer B/mass of plasticizer A) is 0.13 to 3.50. When the mass of the plasticizer B to the plasticizer A is within this numerical value range, transparency, tackiness, impregnability, and tensile strength are all satisfactory.

The lower limit of the mass ratio of the plasticizer B to the plasticizer A may be 0.18 or greater, and from the viewpoint that transparency is further improved, the lower limit is preferably 0.25 or greater, 0.30 or greater, 0.38 or greater, or 0.50 or greater, and more preferably 0.60 or greater, 0.70 or greater, 0.78 or greater, 0.85 or greater, 0.90 or greater, or 0.95 or greater. From the viewpoint that transparency and tackiness are further improved, the upper limit of the mass ratio of the plasticizer B to the plasticizer A may be 2.99 or less, 2.48 or less, 1.97 or less, 1.68 or less, 1.39 or less, or 1.10 or less. The mass ratio of the plasticizer B to the plasticizer A may be 0.38 to 1.97 from the viewpoint that transparency is further improved, and may be 0.78 to 1.39 from the viewpoint that transparency and tackiness are further improved.

The components, component amounts, and composition ratio of the plasticizer in the fiber-reinforced resin sheet of the present embodiment can be analyzed by GC-MS. In a case where the fiber-reinforced resin sheet is a fiber-reinforced resin sheet including a configuration of being sandwiched between resin layers, the component amounts and the composition ratio can be determined by scraping the resin up to a 20 µm portion near the glass fiber fabric by using a polishing machine, a microprocessor, a microtome, or the like, and analyzing the remaining resin with GC-MS.

The resin composition 15 may further include additives such as a flame retardant, an ultraviolet absorber, a filler material, and an antistatic agent.

The glass fiber fabric included in the fiber-reinforced resin sheet of the present embodiment may be a single sheet or a laminated product of a plurality of sheets. The glass fiber fabric included in the fiber-reinforced resin sheet is preferably a single sheet.

It is preferable that the fiber-reinforced resin sheet has a configuration in which a reinforcing fiber layer obtained by impregnating a glass fiber fabric with a resin composition is sandwiched between resin layers formed from the above-mentioned resin composition or a resin different from this. That is, it is preferable that resin layers are formed on both surfaces of a glass fiber fabric impregnated with a resin composition.

The resin constituting the resin layer may be, for example, soft vinyl chloride. To the resin constituting the resin layer, a flame retardant, a plasticizer, an antistatic agent, an ultraviolet absorber, a stabilizer, and the like may be added.

From the viewpoint of making it easy to maintain rigidity of the fiber-reinforced resin sheet, the mass of the fiber-reinforced resin sheet may be 200 g/m² or greater, 360 g/m², or 550 g/m² or greater, and from the viewpoint of making it difficult for the fiber-reinforced resin sheet to sag due to its own weight when used for a tent film material or the like, the mass may be 3700 g/m² or less, 2500 g/m² or less, or 1500 g/m² or less.

The total content of the resin composition and the resin layers that sandwich the glass fiber fabric impregnated with the resin composition may be 150 g/m² or greater, 260 g/m² or greater, or 660 g/m² or greater, from the viewpoint of further enhancing impregnability, and the total content may be 3000 g/m² or less, 2000 g/m² or less, or 1500 g/m² or less, from the viewpoint of making the fiber-reinforced resin sheet even more difficult to burn.

From the viewpoint of further increasing strength, the content of the glass fiber fabric may be 3.0% by mass or greater, 8.0% by mass or greater, 11.0% by mass or greater, or 16.0% by mass or greater with respect to the total mass of the fiber-reinforced resin sheet, and from the viewpoint of further enhancing impregnability, the content may be 60.0% by mass or less, 50.0% by mass or less, 28.0% by mass or less, or 24.0% by mass or less, with respect to the total mass of the fiber-reinforced resin sheet.

The content of the glass fiber fabric can be measured according to JIS K 7052:1999. The total content of the resin composition and the resin layers that sandwich the glass fiber fabric impregnated with the resin composition can be determined as the difference between the masses of a test piece measured before and after calcination according to JIS K 7052:1999.

The total light transmittance of the fiber-reinforced resin sheet 1 is preferably 85% by or higher, and more preferably 90% or higher. The total light transmittance of the fiber-reinforced resin sheet 1 is measured by the method described in the Examples that will be described below.

The haze value of the fiber-reinforced resin sheet 1 is preferably less than 20%, less than 10%, or less than 6%. The haze value of the fiber-reinforced resin sheet 1 is measured by the method described in the Examples that will be described below.

The tensile strength of the fiber-reinforced resin sheet 1 may be 1000 N/25 mm or greater, 1500 N/25 mm or greater, or 2000 N/25 mm or greater. The upper limit of the tensile strength of the fiber-reinforced resin sheet 1 is not particularly limited; however, for example, the upper limit may be 10000 N/cm or less. The tensile strength of the fiber-reinforced resin sheet 1 is measured by the method described in the Examples that will be described below.

### [Method for producing fiber-reinforced resin sheet]

The method for producing a fiber-reinforced resin sheet 1 includes: an impregnation step of impregnating the glass fiber fabric 10 with a solution including the resin composition 15 and an organic solvent; and a volatilization step of volatilizing the organic solvent.

First, the resin composition 15 is dissolved in an organic solvent to create a solution. The organic solvent used here may be any organic solvent capable of dissolving the vinyl chloride-based resin included in the resin composition 15 and is not particularly limited. Examples of the organic solvent include methyl ethyl ketone, methyl cellosolve, and acetone. The organic solvents may be used singly or as a mixture of two or more kinds thereof. On the occasion of dissolving the resin composition 15 in an organic solvent, the operation and conditions may be determined as appropriate according to the type of the organic solvent used, the type of the resin composition 15, and the like. If necessary, insoluble components may be removed by filtration or the like.

Next, the solution including the resin composition 15 and the organic solvent is impregnated into the glass fiber fabric 10 as it is or after appropriately being concentrated or diluted. Examples of a method of impregnating the glass fiber fabric 10 with the solution including the resin composition 15 and an organic solvent, include a method immersing the glass fiber fabric 10 in the above-described solution, and a method of applying the above-described solution on the glass fiber fabric 10. The solution including the resin composition 15 and an organic solvent covers the glass fiber fabric 10 and penetrates into the yarn gaps generated between the warps 12 and between the wefts 14. Next, when the glass fiber fabric 10 impregnated with the above-described solution is dried, the organic solvent is volatilized, a glass fiber fabric in which the resin composition 15 has penetrated into the yarn gaps between glass fiber bundles is obtained, and this becomes the fiber-reinforced resin sheet 1.

A method for producing a fiber-reinforced resin sheet including a configuration in which a reinforcing fiber layer obtained by impregnating a glass fiber fabric with a resin composition is sandwiched between resin layers, includes a forming step of forming resin layers on both surfaces of the glass fiber fabric impregnated with the resin composition, in addition to the above-described steps. The resin layer is formed by sticking a sheet including the resin (preferably, soft vinyl chloride) constituting the resin layer to a glass fiber fabric impregnated with a resin composition. By attaching the sheet including the resin that constitutes the resin layer to each of the two sides of the glass fiber fabric impregnated with a resin composition, and sticking the sheets and the glass fiber fabric by heating and pressurizing, a fiber-reinforced resin sheet having a configuration in which a reinforcing fiber layer is sandwiched between resin layers can be obtained. However, the method for forming the resin layer is not limited to the above-described method, and for example, a method of applying an uncured resin on a glass fiber fabric impregnated with a resin composition and curing the resin, or the like may be used.

The fiber-reinforced resin sheet according to the present embodiment can be used as, for example, a membrane ceiling, a tent warehouse, or a roof of a fireproof building.

### Examples

Hereinafter, the present invention will be described more specifically by way of Examples. However, the present invention is not intended to be limited to these Examples.

### Materials shown below were used.

IPPP/TPP: Mixture of triaryl phosphate isopropylated and triphenyl phosphate at a mass ratio of 3:1 (manufactured by Ajinomoto Fine-Techno Co., Inc., trade name: REOFOS 65)
TXIB: 2,2,4-Trimethyl-1,3-pentanediol diisobutyrate (molecular weight 286)
Neopentyl glycol dimethacrylate (molecular weight 240)
1,2-Ethanediol diacetate (molecular weight 146)

### Example 1:

### [Fabrication of glass fiber fabric]

Glass fiber bundles of 67.5 g/1000 m having a composition (referred to as composition A) in which the SiO₂ content was 65.0% by mass, the Al₂O₃ content was 25.0% by mass, and the MgO content was 10.0% by mass, were used as a warp and a weft to weave by plain weaving such that the weaving density of the warp was 42/25 mm and the weaving density of the weft was 32/25 mm, subsequently the resultant was subjected to a surface treatment using thermal deoiling and methacryloxypropyltrimethoxysilane, and to a fiber opening treatment, and a glass fiber fabric was fabricated. The mass of the glass fiber fabric obtained as the result was 210 g/m², the thickness was 163 µm, and the air permeability was 1.5 cm³/cm²/s.

### [Fabrication of fiber-reinforced resin sheet]

To 100 parts by mass of a vinyl chloride-based resin (manufactured by Yamaichi Chemical Industries Co., Ltd., trade name: NTD-40) containing a copolymer of vinyl chloride and vinyl acetate as a main component (including 50 parts by mass of methyl ethyl ketone), 25 parts by mass of a mixture of triaryl phosphate isopropylated and triphenyl phosphate at a mass ratio of 3:1 as a plasticizer A and 25 parts by mass of 2,2,4-trimethyl-1,3-pentadiol isobutyrate as a plasticizer B were added, and a sol was prepared.

The above-described glass fiber fabric was impregnated with this resin composition, the result was dried at 130°C, methyl ethyl ketone was volatilized, and a glass fiber fabric impregnated with the resin composition was obtained. At this time, the content of the glass fiber fabric was 52% by mass of the glass fiber fabric impregnated with the resin composition. Transparent soft vinyl chloride sheets (manufactured by ACHILLES CORPORATION, trade name: ACHILLES FLARRE) having a thickness of 300 µm were stuck to both surfaces of this glass fiber fabric impregnated with the resin composition, and the assembly was laminated by heating and pressurizing the surfaces with a hot press at 150°C to obtain a fiber-reinforced resin sheet.

The mass of the obtained fiber-reinforced resin sheet was 910 g/m². At this time, the resin composition impregnated into the glass fiber fabric (including the soft vinyl chloride sheet) was 700 g/m², and the content of the glass fiber fabric was 23% by mass with respect to the total mass of the fiber-reinforced resin sheet.

### Example 2:

A fiber-reinforced resin sheet was obtained in the same manner as in Example 1, except that a sol was prepared by changing the amount of the plasticizer A to 20 parts by mass and the amount of the plasticizer B to 20 parts by mass.

### Example 3:

A fiber-reinforced resin sheet was obtained in the same manner as in Example 1, except that neopentyl glycol dimethacrylate was used in place of 2,2,4-trimethyl-1,3-pentadiol isobutyrate as the plasticizer B.

### Example 4:

A fiber-reinforced resin sheet was obtained in the same manner as in Example 1, except that tricresyl phosphate was used in place of the mixture of triaryl phosphate isopropylated and triphenyl phosphate at a mass ratio of 3:1 as the plasticizer A.

### Example 5:

A fiber-reinforced resin sheet was obtained in the same manner as in Example 1, except that 1,2-ethanediol acetate was used in place of 2,2,4-trimethyl-1,3-pentadiol isobutyrate as the plasticizer B.

### Example 6:

A fiber-reinforced resin sheet was obtained in the same manner as in Example 1, except that the glass fiber fabric was fabricated by using a doubled and twisted glass yarn in which both the mass per unit length of the warp and the mass per unit length of the weft were 270 g/1000 m, setting the weaving density of the warp to 24.5/25 mm, setting the weaving density of the weft to 19.5/25 mm, and setting the mass of the glass fiber fabric to 500 g/m², the thickness to 450 µm, and the air permeability to 10.9 cm³/cm²/s.

### Example 7:

A fiber-reinforced resin sheet was obtained in the same manner as in Example 1, except that a sol was prepared by changing the amount of the plasticizer A to 18 parts by mass and the amount of the plasticizer B to 32 parts by mass.

### Example 8:

A fiber-reinforced resin sheet was obtained in the same manner as in Example 1, except that a sol was prepared by changing the amount of the plasticizer A to 32 parts by mass and the amount of the plasticizer B to 18 parts by mass.

### Example 9:

A fiber-reinforced resin sheet was obtained in the same manner as in Example 1, except that a sol was prepared by changing the amount of the plasticizer A to 8 parts by mass and the amount of the plasticizer B to 42 parts by mass.

### Comparative Example 1:

A glass fiber fabric of Comparative Example 1 was fabricated in the same manner as in Example 1, except that the composition A was changed to composition B shown below. Next, a fiber-reinforced resin sheet was obtained in the same manner as in Example 1.

Composition B; SiO₂: 55.0% by mass, Al₂O₃: 14.0% by mass, CaO: 23.0% by mass, MgO: 1.0% by mass, Li₂O + Na₂O + K₂O: 0.6% by mass, B₂O₃: 6.0% by mass, TiO₂: 0.4% by mass

### Comparative Example 2:

A fiber-reinforced resin sheet was obtained in the same manner as in Example 1, except that a sol was prepared by changing the amount of the plasticizer B to 50 parts by mass while the plasticizer A was not used.

### Comparative Example 3:

A fiber-reinforced resin sheet was obtained in the same manner as in Example 1, except that a sol was prepared by changing the amount of the plasticizer A to 42 parts by mass and the amount of the plasticizer B to 8 parts by mass.

### Comparative Example 4:

A fiber-reinforced resin sheet was obtained in the same manner as in Example 1, except that a sol was prepared by changing the amount of the plasticizer A to 3 parts by mass and the amount of the plasticizer B to 47 parts by mass.

### Comparative Example 5:

A fiber-reinforced resin sheet was obtained in the same manner as in Example 1, except that a sol was prepared by changing the amount of the plasticizer A to 50 parts by mass while the plasticizer B was not used.

### Comparative Example 6:

A fiber-reinforced resin sheet was obtained in the same manner as in Example 1, except that a sol was prepared by changing the amount of the plasticizer A to 10 parts by mass and the amount of the plasticizer B to 10 parts by mass.

### Comparative Example 7:

A fiber-reinforced resin sheet was obtained in the same manner as in Example 1, except that a sol was prepared by changing the amount of the plasticizer A to 37.5 parts by mass and the amount of the plasticizer B to 37.5 parts by mass.

### Comparative Example 8:

A fiber-reinforced resin sheet was obtained in the same manner as in Example 1, except that a sol was prepared by using di-2-ethylhexyl phthalate as the plasticizer B.

### Comparative Example 9:

A fiber-reinforced resin sheet was obtained in the same manner as in Example 1, except that a sol was prepared by using dibutyl adipate as the plasticizer B.

### Comparative Example 10:

A fiber-reinforced resin sheet was obtained in the same manner as in Comparative Example 1, except that a sol was prepared by changing the amount of the plasticizer A to 8 parts by mass and the amount of the plasticizer B to 42 parts by mass.

### Comparative Example 11:

A fiber-reinforced resin sheet was obtained in the same manner as in Comparative Example 1, except that a sol was prepared by changing the amount of the plasticizer A to 42 parts by mass and the amount of the plasticizer B to 8 parts by mass.

### Comparative Example 12:

A fiber-reinforced resin sheet of Comparative Example 12 was obtained in the same manner as in Example 1, except that a glass fiber fabric was fabricated such that the mass per unit length of the warp and the mass per unit length of the weft were both 405 g/1000 m, the weaving density of the warp was 18.5/25 mm, the weaving density of the weft was 18.5/25 mm, the mass of the glass fiber fabric was 630 g/m², the thickness was 520 µm, and the air permeability was 13.5 cm³/cm²/s.

### Comparative Example 13:

A fiber-reinforced resin sheet of Comparative Example 13 was obtained in the same manner as in Example 1, except that a glass fiber fabric was fabricated such that the mass per unit length of the warp and the mass per unit length of the weft were both 22.4 g/1000 m, the weaving density of the warp was 60.0/25 mm, the weaving density of the weft was 58.0/25 mm, the mass of the glass fiber fabric was 100 g/m², the thickness was 85 µm, and the air permeability was 6.0 cm³/cm²/s.

### [Evaluation of fiber-reinforced resin sheet]

### (a) Evaluation of transparency

The total light transmittance and the diffusion transmittance of the fiber-reinforced resin sheet were measured using an integrating sphere type measuring apparatus according to JIS K 7105, and the haze value was determined from those values. A case in which the haze value was less than 6% at a total light transmittance of 85% or higher was rated as A; a case in which the total light transmittance was 85% or higher while the haze value was 6% or greater and less than 10% was rated as B; a case in which the total light transmittance was 85% or higher while the haze value was 10% or greater ad less than 20% was rated as C; and a case in which the total light transmittance was less than 85%, or the haze value was 20% or greater, was rated as D.

### (b) Evaluation of tackiness

With reference to the linear pressure-bonding method of JIS K 7071, an evaluation of the tackiness of the glass fiber fabric impregnated with the resin composition was performed. Specifically, a glass fiber fabric was impregnated with a resin composition and dried at 130°C, subsequently two sheets of the glass fiber fabric processed into a size of 10 mm in width and 50 mm in length were placed such that the central portions intersected, a load of 5000 kN was applied to the intersection point and held for 30 seconds to bring the sheets into close contact. After unloading, two sheets the glass fiber fabrics were detached, and a case in which the two sheets were not adhered and could be detached without resistance was rated as A; a case in which the two sheets adhered to each other; however, no scratches were visually recognized in the glass fibers after the glass fiber fabrics were detached, was rated as B; while a case in which the two sheets adhered to each other and were not detached, or scratches remained in the glass fibers after the glass fiber fabrics were detached, was rated as C.

### (c) Evaluation of impregnability

A fiber-reinforced resin sheet was fabricated by using a glass fiber fabric for which the time for immersing the glass fiber fabric in the resin composition was changed, laminating the glass fiber fabric together with a vinyl chloride sheet, and heating and pressurizing the assembly, and it was evaluated whether the obtained fiber-reinforced resin sheet was in a state that there were no air bubbles having a size of 1 mm or greater inside the resin sheet, and white cross marks indicating non-impregnation were not visually recognized (referred to as sufficient impregnation). When sufficient impregnation was obtained within one hour after the glass fiber fabric was dipped in a prepared sol, it was considered as OK, and when sufficient impregnation was not obtained even after the glass fiber fabric was immersed for one hour or longer, it was considered as NG.

### (d) Evaluation of tensile strength

When a glass fiber fabric was cut into a size of 25 mm in width and 150 mm in both the vertical direction and the horizontal direction to fabricate a test piece, and the test piece was evaluated by a tensile test according to JIS L 1096:2010, a case in which the tensile strength was 2000 N/25 mm or greater was rated as A; a case in which the tensile strength was less than 1000 N/25 mm and 1000 N/25 mm or greater was rated as B; and a case in which the tensile strength was less than 1000 N/25 mm was rated as C.

**[Table 1]**

| | Example | | | | | | | | |
|---|---|---|---|---|---|---|---|---|---|
| | 1 | 2 | 3 | 4 | 5 | 6 | 7 | 8 | 9 |
| Glass composition of glass fiber fabric | Composition A | | | | | | | | |
| Mass per unit length of warp (g/1000 m) | 67.5 | 67.5 | 67.5 | 67.5 | 67.5 | 270 | 67.5 | 67.5 | 67.5 |
| Mass per unit length of weft (g/1000 m) | 67.5 | 67.5 | 67.5 | 67.5 | 67.5 | 270 | 67.5 | 67.5 | 67.5 |
| Plasticizer A: Aromatic phosphoric acid ester-based plasticizer | IPPP/TPP | | | Tricresyl phosphate | IPPP/TPP | | | | |
| Content of plasticizer A (% by mass) | 25.0 | 20.0 | 25.0 | 25.0 | 25.0 | 25.0 | 18.0 | 32.0 | 8.0 |
| Plasticizer B: Plasticizer which is an ester compound of a diol and a carboxylic acid | TXIB | | Neopentyl glycol dimethacrylate | TXIB | 1,2-Ethanediol diacetate | TXIB | | | |
| Plasticizer B: Aliphatic dibasic acid ester-based plasticizer | - | - | - | - | | - | - | - | - |
| Plasticizer B: Phthalic acid ester-based plasticizer | - | - | - | - | | - | - | - | - |
| Content of plasticizer B (% by mass) | 25.0 | 20.0 | 25.0 | 25.0 | 25.0 | 25.0 | 32.0 | 18.0 | 42.0 |
| Total content of plasticizer (% by mass) | 50.0 | 40.0 | 50.0 | 50.0 | 50.0 | 50.0 | 50.0 | 50.0 | 50.0 |
| Plasticizer A/plasticizer B | 1.00 | 1.00 | 1.00 | 1.00 | 1.00 | 1.00 | 0.56 | 1.78 | 0.19 |
| Haze value (%) | 5.8 | 5.5 | 5.5 | 6.4 | 6.3 | 9.2 | 7.2 | 7.4 | 17.6 |
| Total light transmittance (%) | 89.4 | 89.2 | 89.3 | 89.3 | 89.1 | 88.2 | 88.9 | 89.0 | 87.6 |
| Transparency | A | A | A | B | B | B | B | B | C |
| Tackiness | A | A | A | A | A | A | A | B | A |
| Impregnability | OK | OK | OK | OK | OK | OK | OK | OK | OK |
| Tensile strength | B | B | B | B | B | A | B | B | B |

**[Table 2]**

| | Comparative Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Glass composition of glass fiber fabric | Composition B | Composition A | | | | | | | | Composition B | | Composition A | |
| Mass per unit length of warp (g/1000 m) | 67.5 | 67.5 | 67.5 | 67.5 | 67.5 | 67.5 | 67.5 | 67.5 | 67.5 | 67.5 | 67.5 | 405 | 22.4 |
| Mass per unit length of weft (g/1000 m) | 67.5 | 67.5 | 67.5 | 67.5 | 67.5 | 67.5 | 67.5 | 67.5 | 67.5 | 67.5 | 67.5 | 405 | 22.4 |
| Plasticizer A: Aromatic phosphoric acid ester-based plasticizer | IPPP/TPP | | | | | | | | | | | | |
| Content of plasticizer A (% by mass) | 25.0 | 0.0 | 42.0 | 3.0 | 50.0 | 10.0 | 37.5 | 25.0 | 25.0 | 8.0 | 42.0 | 25.0 | 25.0 |
| Plasticizer B: Plasticizer which is an ester compound of a diol and a carboxylic acid | TXIB | | | | | | | - | - | TXIB | | | |
| Plasticizer B: Aliphatic dibasic acid ester-based plasticizer | - | - | - | - | - | - | - | - | Dibutyl adipate | | - | - | - |
| Plasticizer B: Phthalic acid ester-based plasticizer | - | - | - | - | - | - | - | Di-2-ethylhexyl phthalate | - | - | - | - | - |
| Content of plasticizer B (% by mass) | 25.0 | 50.0 | 8.0 | 47.0 | 0.0 | 10.0 | 37.5 | 25.0 | 25.0 | 42.0 | 8.0 | 25.0 | 25.0 |
| Total content of plasticizer (% by mass) | 50.0 | 50.0 | 50.0 | 50.0 | 50.0 | 20.0 | 75.0 | 50.0 | 50.0 | 50.0 | 50.0 | 50.0 | 50.0 |
| Plasticizer A/plasticizer B | 1.00 | 0.00 | 5.25 | 0.06 | - | 1.00 | 1.00 | 1.00 | 1.00 | 0.19 | 5.25 | 1.00 | 1.00 |
| Haze value (%) | 84.4 | 50.9 | 10.6 | 10.0 | 13.6 | 18.0 | 5.5 | 11.9 | 11.4 | 89.8 | 82.6 | 22.1 | 5.5 |
| Total light transmittance (%) | 89.2 | 88.4 | 89.3 | 89.2 | 89.1 | 87.2 | 89.4 | 89.3 | 89.4 | 89.5 | 89.1 | 86.1 | 91.5 |
| Transparency | D | D | C | C | C | C | A | C | C | D | D | D | A |
| Tackiness | A | A | C | C | C | A | C | C | C | A | C | A | A |
| Impregnability | OK | OK | OK | OK | OK | NG | OK | OK | OK | OK | OK | NG | OK |
| Tensile strength | B | B | B | B | B | B | B | B | B | B | B | A | C |

Table 1 and Table 2 show the evaluation results for transparency, tackiness, impregnability, and tensile strength. The fiber-reinforced resin sheets of Examples had high tensile strength, had transparency, and had excellent impregnability and handleability (tackiness) during production.

### Reference Signs List

1: fiber-reinforced resin sheet, 10: glass fiber fabric, 12: warp, 14: weft, 15: resin composition.

## Claims

1. A fiber-reinforced resin sheet comprising:
a glass fiber fabric comprising a warp and a weft; and
a resin composition impregnated into the glass fiber fabric,
wherein glass constituting the glass fiber fabric comprises SiO₂ in an amount in the range of 60.0 to 70.0% by mass, Al₂O₃ in an amount in the range of 20.0 to 30.0% by mass, and MgO in an amount in the range of 5.0 to 15.0% by mass, with respect to a total amount of the glass fiber fabric,
masses per 1000 m of the warp and the weft constituting the glass fiber fabric are each 45.0 to 335.0 g/1000 m,
the resin composition comprises a vinyl chloride-based resin and a plasticizer,
a content of the plasticizer is 30.0 to 63.0% by mass with respect to a total amount of the resin composition,
the plasticizer comprises a plasticizer A, which is an aromatic phosphoric acid ester-based plasticizer, and a plasticizer B, which is an ester compound of a diol and a carboxylic acid, and
a mass ratio of the plasticizer B to the plasticizer A is 0.13 to 3.50.

2. The fiber-reinforced resin sheet according to claim **1,** wherein the mass ratio of the plasticizer B to the plasticizer A is 0.38 to 1.97.

3. The fiber-reinforced resin sheet according to claim 1 or 2, wherein the mass ratio of the plasticizer B to the plasticizer A is 0.78 to 1.39.

4. The fiber-reinforced resin sheet according to claim 1 or 2, wherein the plasticizer A is a mixture of two or more kinds of aromatic phosphoric acid ester-based plasticizers.

5. The fiber-reinforced resin sheet according to claim 1 or 2, wherein the plasticizer B has a molecular weight of 100 to 500.

6. The fiber-reinforced resin sheet according to claim 1 or 2, wherein the fiber-reinforced resin sheet has a configuration in which a fiber-reinforced resin sheet is sandwiched between resin layers formed of the resin composition or a resin different from this resin composition.

## Patentansprüche

1. Eine faserverstärkte Harzfolie, umfassend:
ein Glasfasergewebe, umfassend eine Kette und einen Schuss; und
eine Harzzusammensetzung, die in das Glasfasergewebe imprägniert ist,
wobei das Glas, das das Glasfasergewebe bildet, SiO₂ in einer Menge im Bereich von 60,0 bis 70,0 Massen-%, Al₂O₃ in einer Menge im Bereich von 20,0 bis 30,0 Massen-% und MgO in einer Menge in einem Bereich von 5,0 bis 15,0 Massen-%, bezogen auf die Gesamtmenge des Glasfasergewebes, umfasst,
die Massen pro 1000 m der Kett- und Schussfäden, aus denen das Glasfasergewebe besteht, jeweils 45,0 bis 335,0 g/1000 m betragen,
die Harzzusammensetzung ein Harz auf Vinylchloridbasis und einen Weichmacher umfasst,
ein Gehalt des Weichmachers 30,0 bis 63,0 Massen-% bezogen auf die Gesamtmenge der Harzzusammensetzung beträgt,
der Weichmacher einen Weichmacher A, der ein Weichmacher auf Basis eines aromatischen Phosphorsäureesters ist, und einen Weichmacher B, der eine Esterverbindung aus einem Diol und einer Carbonsäure ist, umfasst, und
ein Massenverhältnis des Weichmachers B zu Weichmacher A 0,13 bis 3,50 beträgt.

2. Die faserverstärkte Harzfolie gemäß Anspruch 1, wobei das Massenverhältnis des Weichmachers B zu Weichmacher A 0,38 bis 1,97 beträgt.

3. Die faserverstärkte Harzfolie gemäß Anspruch 1 oder 2, wobei das Massenverhältnis des Weichmachers B zu Weichmacher A 0,78 bis 1,39 beträgt.

4. Die faserverstärkte Harzfolie gemäß Anspruch 1 oder 2, wobei der Weichmacher A ein Gemisch aus zwei oder mehr Arten von Weichmachern auf Basis aromatischer Phosphorsäureester ist.

5. Die faserverstärkte Harzfolie gemäß Anspruch 1 oder 2, wobei der Weichmacher B ein Molekulargewicht von 100 bis 500 aufweist.

6. Die faserverstärkte Harzfolie gemäß Anspruch 1 oder 2, wobei die faserverstärkte Harzfolie so aufgebaut ist, dass eine faserverstärkte Harzfolie zwischen Harzschichten liegt, die aus der Harzzusammensetzung oder einem von dieser Harzzusammensetzung verschiedenen Harz gebildet sind.

## Revendications

1. Feuille de résine renforcée de fibres comprenant:
un tissu de fibres de verre comprenant une chaîne et une trame; et
une composition de résine imprégnant le tissu de fibres de verre,
dans laquelle le verre constituant le tissu de fibres de verre comprend SiO₂ en une quantité dans la plage de 60,0 à 70,0 % en masse, Al₂O₃ en une quantité dans la plage de 20,0 à 30,0 % en masse et MgO en une quantité dans la plage de 5,0 à 15,0 % en masse, par rapport à une quantité totale du tissu de fibres de verre,
les masses pour 1000 m de la chaîne et de la trame constituant le tissu de fibres de verre sont chacune de 45,0 à 335,0 g/1000 m,
la composition de résine comprend une résine à base de chlorure de vinyle et un plastifiant,
une teneur du plastifiant est de 30,0 à 63,0 % en masse par rapport à une quantité totale de la composition de résine,
le plastifiant comprend un plastifiant A, qui est un plastifiant à base d'ester d'acide phosphorique aromatique, et un plastifiant B, qui est un composé ester d'un diol et d'un acide carboxylique, et
un rapport massique du plastifiant B au plastifiant A est de 0,13 à 3,50.

2. Feuille de résine renforcée de fibres selon la revendication 1, dans laquelle le rapport massique du plastifiant B au plastifiant A est de 0,38 à 1,97.

3. Feuille de résine renforcée de fibres selon la revendication 1 ou 2, dans laquelle le rapport massique du plastifiant B au plastifiant A est de 0,78 à 1,39.

4. Feuille de résine renforcée de fibres selon la revendication 1 ou 2, dans laquelle le plastifiant A est un mélange de deux ou plusieurs types de plastifiants à base d'esters d'acide phosphorique aromatiques.

5. Feuille de résine renforcée de fibres selon la revendication 1 ou 2, dans laquelle le plastifiant B a une masse moléculaire de 100 à 500.

6. Feuille de résine renforcée de fibres selon la revendication 1 ou 2, dans laquelle la feuille de résine renforcée de fibres a une configuration dans laquelle une feuille de résine renforcée de fibres est prise en sandwich entre des couches de résine formées de la composition de résine ou d'une résine différente de cette composition de résine.
